# EUROPEAN PATENT APPLICATION

(11) **EP 2 462 814 A2**
(43) Date of publication of application: **13.06.2012**
(21) Application number: 11009666.6
(22) Date of filing: 07.12.2011
(51) Int. Cl.: A23K 1/18, A23K 1/16, A23K 1/14

(54) **Feed for common carp and method of rearing common carp with increased content of omega 3 fatty acids**

(30) Priority: 08.10.2010 CZ 20100739
(71) Applicant: Fakulta rybárstvi a ochrany vod Jihoceská univerzita v Ceskych, 38925 Vodnany (CZ)
(72) Inventor: Mraz, Jan, 39811 Protivin (CZ); Pickova, Jana, 45421 Brastad (SE); Kozak, Pavek, 39811 Protivin (CZ)
(74) Representative: Sedlák, Jirí

(57) **Abstract**

It is an object of the invention to increase the content of omega 3 fatty acids in carp meat to improve its nutritive properties and to achieve a better effect in prevention and treatment of many diseases of civilization. This effect is achieved by a feed comprising a mixture containing colza cake in the amount from 12 to 20% by weight, extruded linseed in the amount from 10 to 20% by weight, cereals in the amount from 56 to 72% by weight, soya grout in the amount from 5 to 10% by weight, limestone in the amount from 1 to 2% by weight, premiw for carps in the amount up to 1% by weight and a stabilizing agent in the amount up to 0,5% by weight. the mixture can be added by linseed oil and/or rape oil and:or echium oil from the seeds of *Echium plantagineum*. The carp receives the above described supplementary feed in the ponds with a lower stocking density, where the half of the total increase of carp is formed by the natural food of plankton and bentons. The clean the meat and to improve the composition of fats the carp is maintained in post-harvest live-tanks. The reserve fat from the abdomen part characteristic for less valuable fats is removed when filleting.

## Description

### Field of the invention

The object of the invention is the feed for common carp, method of rearing common carp in ponds and method of preparing carp meet aiming at increasing the content of omega 3 fatty acids in carp meet supplied on the market.

In general fish are a source for human nutrition rich in omega 3 fatty acids. These fatty acids are recognized as a unique tool to prevent and treat many lifestyle diseases, especially of the cardiovascular apparatus. The content of these unique substances in fish meet is influenced by many factors, primarily by the composition of their diet. Traditionally, common carp is reared in ponds fed on natural food, made up by plankton and benthos, and to cover its energy needs it is provided with supplemental feed such as cereals. Since cereals are rich in starch and omega 6 fatty acids (but not in omega 3 fatty acids), the result quality of carp meet is much lower than its capacity is. Subsequently the carp as the source of omega 3 fatty acids is neglected by consumers.

The feed of freshwater fish has the greatest influence on the composition of fatty acids in their meet. The best composition of fatty acids in the meet of freshwater fish is achieved by feeding them with feed containing oils from sea fish, containing a high amount of omega 3 fatty acids, endowed with a good ratio of content of omega 3 : omega 6 fatty acids and with a high ratio of eicosapentaenoic acid 20:5n-3 (EPA), decosapentaenoic acid 22:5n-3 (DPA) and decosahexaenoic acid 22:6n-3 (DHA). The amount of EPA, DPA and DHA is the most important for a healthy composition of lipids, in the same way as the amount of highly unsaturated fatty acids-HUFA, containing 20 and more carbons and more double bonds. Further, the ratio of content of omega 3: omega 6 fatty acids is important, its optimum value should be lower than 1:4.

However, the sources of sea fish oils are limited worldwide resulting in their continuous increase in prize as a component of freshwater fish feed. Alternatively other oils and fats are used that are mixed with sea fish oil.

There are known feeds for freshwater fish containing either linseed oil or olive oil, hempseed oil or any other oil, such as e.g. palm oil, rape oil, soya oil, sunflower oil and others. Other feeds contain lard or waste poultry fats which, however, are inappropriate for creation of an increased content of omega 3 fatty acids.

**Table 1 Content of omega 3 fatty acids in oils sustainable for aquaculture**

| Oil | Omega 3 (%) | omega 3:omega 6 |
|---|---|---|
| **Linseed oil** | 60 | 1:0,2 |
| **Echium oil** | 40 | 1:0,7 |
| **Hemp oil** | 22 | 1:2,5 |
| **Rape oil** | 13 | 1:2 |
| **Soya oil** | 8 | 1:7 |
| **Olive oil** | 1 | 1:8 |
| **Palm oil** | 0,5 | 1:20 |
| **Corn oil** | 1 | 1:60 |
| **Cottonseed oil** | - | >1:100 |
| **Sunflower oil** | 0,5 | >1:100 |

On the market there is no supplemental feed for the carp in ponds that would ensure sufficient quality of fat with a high content of omega 3 fatty acids and with other parameters appropriate for healthy diet and that would be ecologically and economically sustainable in the long run. This implies that the object of the invention is to create feed for carps and the method of rearing carp and the method of preparation of carp meet that would increase the omega 3 fatty acids in the muscle mass of the carp and that would improve other important parameters in the composition of fats in the meet and the content of healthy substances, keeping the costs as low as possible.

### Summary of the invention

The subject matter of the invention is to create an appropriate feed the price of which would be moderate and the composition of which would contribute optimally to the creation of omega 3 fatty acids and other beneficial substances described in the field of the state of the art in the carp meat.

The subject matter of the feed for carps according to the present invention lies in the fact that it comprises a mixture containing colza cake in the amount from 12 to 20% by weight, extruded linseed in the amount from 10 to 20% by weight, cereals in the amount from 56 to 72% by weight, soya grout in the amount from 5 to 10% by weight, limestone in the amount from 1 to 2% by weight, premix for carps in the amount up to 1% by weight and Wafolin in the amount up to 0,5% by weight. Wafolin is a commercially accessible product on the lignosulfonate basis designated to improve the physical stability of the feed.

In an advantageous embodiment of the feed according to the present invention the cereals consist of wheat cereals in the amount from 50 to 60% by weight and maize in the amount from 6 to 15% by weight and the wheat cereals consist of a mixture of wheat, wheat flour and wheat bran. Thus all wheat products including the cheaper bran are used.

In other advantageous embodiments the mixture can be added by linseed oil in the amount up to 10% by weight and/or rape oil in the amount up to 10% by weight and/or echium oil from the seeds of *Echium plantagineum* in the amount up to 10% by weight.

The useful property of the mixture forming the feed are based on an optimum combination of the content of colza cake and extruded linseed providing the mixture with a relatively cheap source rich in alpha-linolenic acid 18:3n-3 (ALA). ALA and the stearidonic acid 18:4n-3 (SDA) both increasing the content of omega 3 fatty acids are a precursor for the synthesis of highly unsaturated omega 3 fatty acids-EPA and DHA. It is another important factor that the mixture has an optimum ratio of omega 3 and omega 6 fatty acids between 1:1 to 2:1, appropriate for the growth of the carp and the synthesis of EPA and DHA. Another advantage of this mixture is the fact that it contains a sufficient amount of essential fatty acids for a good growth of the carp. This fact is also important to decrease creating and storing of disadvantageous saturated and monounsaturated fatty acids in the meat of the carp. Fish are given this feed in the form of granules to prevent loss and separation of individual components.

The subject matter of the present invention also is the method of rearing the common carp, the essence of which consists in supplementary feeding of the carp with the above described feed.

In an advantageous embodiment of the method of rearing the common carp the increase of beneficial substances in carp meat is achieved by semi-intensive method of rearing the carp in ponds in lower stocking densities so that the increase from natural food makes up one half of the total increase. Natural food, represented by plankton and benthos in the ponds, is in this method of rearing the basic adequate source of food. The natural food is a source rich in omega 3 fatty acids, especially of EPA and DHA. The increase in natural food available causes the content of omega 3 fatty acids to increase in the carp meat. In other words, the higher is the portion of increase in fish from natural food the better is the resulting composition of fat in carp meat.

In an advantageous embodiment of the method of rearing the common carp according to the present invention, the carp before being distributed is maintained in a post- harvest live-tank for a short period of time. In the autumn the fish are maintained in a post- harvest live-tank for at least 3 weeks. The fish are maintained in clean water in the post-harvest live-tank with a sufficient supply of quality oxygenic water. The fish dispose of left overs of their feed from their digestive track and impurities and at the same time they dispose of undesirable smack and the less valuable fatty acids are consumed.

Another subject matter of this present invention is the method of preparation of carp meat to sell with an increased content of omega 3 fatty acids. The carp is reared according to the above described method of rearing and after harvesting and killing the carp, the reserve fat from the abdomen part characteristic for less valuable fats is removed when filleting.

The advantages of the invention can be particularly seen in the fact that improved quality of carp meat is achieved. As consequence of the increased content of omega 3 fatty acids and other substances beneficial to human health, the carp meat can become an even more important factor in human nourishment, supporting prevention and treatment of a whole range of diseases of civilization. At present organic food, healthy food and the so-called functional food tend to gain in popularity and the above mentioned factor could support the consumption of carp meat and influence beneficially the health of the population. The advantage of the present invention consists in the feed, the method of rearing and the method of preparation of the carp meat is economical, undemanding on resources and compared with known feeds and methods of rearing they do not bring along any significant increase in costs.

### Preferred embodiments of the invention

The below described and depicted particular examples of the invention embodiments are considered illustrative and they in no way limit the invention embodiment to the examples herein presented. Professionals in the technology sphere will find or will be able to find more or fewer equivalents to the specific embodiments of the invention herein described in their routine experimental work. These equivalents will also be included in the following claims.

A farm pond of a 2 ha surface with an average natural productivity of 250 kg/ha is stocked with a three year old common carp with an average weight of 1 kg per piece and in a density of the stock of 500 pc/ha. The plan is for the fish to grow by 1 kg in average in the course of one vegetation period, in total 500 kg/ha. It is planned to feed in the pond 1000 kg of feeding mixture per ha, the feeding coefficient being 2 and the total growth rate being 500 kg/ha. The pond is fed by a creek water so as to supply the evaporated water but not to wash out the plankton. Fish are in the course of the vegetation period supplement fed three times a week by a granulated feeding mixture the composition of which is shown in the following table:

**Table 2 The composition of the feed**

| Compound of the feed | Particular composition of the mixture in % by weight | The range in % by weight |
|---|---|---|
| Colza cake | 15 | 12-20 |
| Extruded linseed | 15 | 10-20 |
| Linseed oil | 0 | 0-10 |
| Rape oil | 0 | 0-10 |
| Echium oil | 0 | 0-10 |
| Wheat-flour-bran | 55 | 50-58 |
| maize | 6,5 | 6-14 |
| Soya grout | 6,5 | 5-10 |
| limestone | 1,5 | 1-2 |
| Premix for carps Carp 0,3 | 0,3 | 0,3 |
| Wafolin | 0,2 | 0,2 |

| | | |
|---|---|---|
| • Premix for carps Carp 0,3 is a commercially accessible mixture of vitamins, minerals and nutritional substances designated as a feed for carps • Wafolin is a commercially accessible product on lignosulfonate basis designated to improve the physical stability of feeding pellets. | | |

The size of the feeding dose oscillates between one to three percent of the actual weight of the carp population and is adjusted depending on the temperature of the water, saturation by the oxygen, and the amount of accessible natural feed.

At the end of October the carp population is harvested and transported to the fish tank. In the fish tank the fish is kept for a period of up to one month, after which they are processed in the filets. When processing the fish in filets, the spare fats from the abdomen part is removed by cutting.

The fish meat prepared according to the preceding is characterized by the amount and quality of fat in a portion of 200g (see table 3).

**Table 3 Description of the content and composition of fat in a 200 g portion of carp meet with an increased content of omega 3 fatty acids**

| | average | minimum | maximum |
|---|---|---|---|
| Content of fat | 15 g | 10 | 20 |
| Saturated fatty acids | 3 g | 2 | 4 |
| Monosaturated fatty acids | 6 g | 4 g | 8 g |
| Polyunsaturated fatty acids | 3 g | 2,5 g | 3,5 g |
| Omega 3 fatty acids | 1 g | 0,8 mg | 1,2g |
| Omega 3:omega 6 | 1:1,75 | 1:1,5 | 1:2 |
| Omega 3 HUFA | 600 mg | 400 mg | 800 mg |
| EPA+DHA | 300 mg | 200 mg | 400 mg |

| | | | |
|---|---|---|---|
| HUFA = highly unsaturated fatty acids with 20 and more carbons | | | |

## Claims

1. Feed for common carp with a content of natural oils **characterized in that** it comprises a mixture containing colza cake in the amount from 12 to 20% by weight, extruded linseed in the amount from 10 to 20% by weight, cereals in the amount from 56 to 72% by weight, soya grout in the amount from 5 to 10% by weight, limestone in the amount from 1 to 2% by weight, premix for carps in the amount up to 1% by weight and a stabilizing agent in the amount up to 0,5% by weight.

2. The feed according to claim 1 **characterized in that** the cereals consist of wheat cereals in the amount from 50 to 60% by weight and maize in the amount from 6 to 15% by weight.

3. The feed according to claim 2 **characterized in that** the wheat cereals consist of a mixture of wheat, wheat flour and wheat bran.

4. The feed according to claim 1 or claim 2 or claim 3 **characterized in that** it further contains linseed oil in the amount up to 10% by weight.

5. The feed according to at least one of the claims 1 to 4 **characterized in that** it further contains rape oil in the amount up to 10% by weight.

6. The feed according to at least one of the claims 1 to 4 **characterized in that** it further contains echium oil from the seeds of *Echium plantagineum* in the amount up to 10% by weight.

7. The method of rearing common carp with increased content of omega 3 fatty acids in the carp meet **characterized in that** the carp is provided with supplemental feed consisting of a mixture containing colza cake in the amount from 12 to 20% by weight, extruded linseed in the amount from 10 to 20% by weight, cereals in the amount from 56 to 72% by weight, soya grout in the amount from 5 to 10% by weight, limestone in the amount from 1 to 2% by weight, premix for carps in the amount up to 1% by weight and a stabilizing agent in the amount up to 0,5% by weight.

8. The method of rearing common carp according to claim 7 **characterized in that** the cereals consist of wheat cereals in the amount from 50 to 60% by weight and maize in the amount from 6 to 15% by weight.

9. The method of rearing common carp according to claim 8 **characterized in that** the wheat cereals contained in the feed consist of a mixture of wheat, wheat flour and wheat bran.

10. The method of rearing common carp according to at least one of the claims 7 to 9 **characterized in that** the feed further contains linseed oil in the amount up to 10% by weight.

11. The method of rearing common carp according to at least one of the claims 7 to 10 **characterized in that** the feed further contains rape oil in the amount up to 10% by weight.

12. The method of rearing common carp according to at least one of the claims 7 to 11 **characterized in that** the feed further contains echium oil from the seeds of *Echium plantagineum* in the amount up to 10% by weight.

13. The method of rearing common carp according to at least one of the claims 7 to 12 **characterized in that** the carp is reared in ponds in lower stocking densities where one half of the total increase is made up by the increase from natural food made up by plankton and benthos.

14. The method of rearing common carp according to at least one of the claims 7 to 12 **characterized in that** the carp after fishing out the pond is maintained in a post-harvest live-tank for a period from 3 to 8 weeks to dispose of undesirable smack and the less valuable fatty acids are consumed.

15. The method of preparation of carp meet to sell with an increased content of omega 3 fatty acids **characterized in that** the carp is reared according to the method according to at least one of the claims 7 to 12 and after harvesting and killing the carp, the reserve fat from the abdomen part characteristic for less valuable fats is removed when filleting.
